# EUROPEAN PATENT APPLICATION

(11) **EP 3 181 340 A1**
(43) Date of publication of application: **21.06.2017**
(21) Application number: 16202810.4
(22) Date of filing: 08.12.2016
(51) Int. Cl.: B29D 30/06, B60C 19/12, B29C 73/16, B29C 73/22

(54) **A PNEUMATIC TIRE WITH A SEALANT COMPONENT**

(30) Priority: 18.12.2015 US 201514973784
(71) Applicant: The Goodyear Tire & Rubber Company, Akron, Ohio 44316 (US)
(72) Inventor: SPORTELLI, Francesco, 3249 Bettembourg (LU); ZANZIG, David John, Uniontown, OH 44685 (US); LECHTENBOEHMER, Annette, 9048 Ettelbruck (LU)
(74) Representative: Kutsch, Bernd

(57) **Abstract**

A pneumatic tire is disclosed comprising two axially inextensible annular beads (28A, 28B), a carcass (22) having at least one reinforced ply (14), an air impermeable innerliner (23) extending along an interior of the carcass from one bead region (24A) to the other bead region (24B) of the tire (10), a tread (12) disposed radially outward of the carcass (22), a belt structure (16) disposed radially between the carcass (22) and the tread (12), and a sealant component (101) having a three dimensional fabric (100) and a flowable sealant material (100) contained by the three dimensional fabric (100).

## Description

### Field of the Invention

The present invention relates to a pneumatic tire, and more particularly, to a radial passenger tire or a high performance tire having a three dimensional sealant component.

### Background of the Invention

It is known to apply puncture sealants, made from a puncture sealing rubber or plastic material on the crown portion of the tire so that when a sharp object, such as a nail, pierces the tire, the tire sealant forms a seal around the puncture. Tire sealants of this nature tend to flow or be soft resulting in a tendency to migrate towards the center portion of the tire due to centrifugal force as the tire is rotated at high speeds. Thus, the outer portions of the crown have reduced sealant volume due to migration of the sealant towards the center.

It is known to compartmentalize a sealant into multiple cells underneath the tread. One disadvantage to compartmentalizing the sealant into multiple cells is that the manufacturing process is costly. Further, using an extruder to manufacture the sealant into compartments is costly and requires additional manufacturing steps.

Thus, it is desired to provide a tire and a low cost manufacturing method for providing puncture sealant in a tire which does not migrate during use.

Also, because of the above mentioned migration/flow issue, conventional tires have not provided sealant in the sidewall portions.

Thus, it is desired to provide puncture sealant continuously both underneath the tread and inside the tire sidewalls, as well.

### Summary of the Invention

The invention relates to a tire in accordance with claim 1.

Dependent claims refer to preferred embodiments of the invention.

A pneumatic tire in accordance with a preferred aspect of the present invention has an axis of rotation and comprises two radially inextensible annular bead portions, a carcass having at least one reinforced ply, an air impermeable innerliner extending along an interior of the carcass from one bead portion to the other bead portion, a tread disposed radially outward of the carcass, a belt structure disposed radially between the carcass and the tread, and a sealant component having a three dimensional fabric and a flowable sealant material contained by the three dimensional fabric.

According to a preferred aspect of the pneumatic tire, the sealant component further comprises an adhesive disposed thereon for securing the sealant component to the innerliner.

According to still another preferred aspect of the pneumatic tire, the sealant component has hexagonal structures containing the sealant material.

According to yet another preferred aspect of the pneumatic tire, the sealant component has wave structures containing the sealant material.

According to still another preferred aspect of the pneumatic tire, the sealant component has four hexagonal structures containing the sealant material.

According to yet another preferred aspect of the pneumatic tire, the sealant component has three planar structures containing the sealant material.

According to still another preferred aspect of the pneumatic tire, the sealant component has four two plane structures containing the sealant material.

According to yet another preferred aspect of the pneumatic tire, the sealant component has three curved structures containing the sealant material.

According to still another preferred aspect of the pneumatic tire, the sealant component has the interrelated individual fibers containing the sealant material.

According to yet another preferred aspect of the pneumatic tire, the sealant component has a plurality of cells defined by a three dimensional structure of the three dimensional fabric.

### Definitions

"Apex" or "bead filler apex" means an elastomeric filler located radially above the bead core and between the plies and the turnup plies.

"Axial" and "Axially" mean the lines or directions that are parallel to the axis of rotation of the tire.

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Carcass" means the tire structure apart from the belt structure, tread, undertread over the plies, but including the beads.

"Chipper" refers to a narrow band of fabric or steel cords located in the bead area whose function is to reinforce the bead area and stabilize the radially inwardmost part of the sidewall.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Equatorial Plane" means the plane perpendicular to the tire's axis of rotation and passing through the center of its tread; or the plane containing the circumferential centerline of the tread.

"Flipper" refers to a reinforcing fabric around the bead wire for strength and to tie the bead wire in the tire body.

"Inner Liner" means the layer or layers of elastomer or other material that form the inside surface of a tubeless tire and that contain the inflating fluid within the tire.

"Lateral" means a direction parallel to the axial direction.

"Ply" means a cord-reinforced layer of rubber-coated radially deployed or otherwise parallel cords.

"Radial" and "radially" mean directions radially toward or away from the axis of rotation of the tire.

"Sidewall" means that portion of a tire between the tread and the bead.

"Toe guard" refers to the circumferentially deployed elastomeric rim-contacting portion of the tire axially inward of each bead.

"Turnup end" means the portion of a carcass ply that turns upward (i.e., radially outward) from the beads about which the ply is wrapped.

### Brief Description of the Drawings

The structure, operation, and advantages of the invention will become more apparent upon contemplation of the following description taken in conjunction with the accompanying drawings, wherein:
FIG. 1 represents a schematic cross-sectional view of an example tire in accordance with the present invention;
FIG. 2 represents a schematic detail view of the bead region of the example tire shown in FIG. 1;
FIG. 3 represents a schematic detail view of another bead region for use with present invention;
FIG. 4 represents a schematic detail of an example three dimensional fabric in accordance with the present invention;
FIG. 5 represents a schematic detail of another example three dimensional fabric in accordance with the present invention;
FIG. 6 represents a schematic detail of still another example three dimensional sealant component in accordance with the present invention;
FIG. 7 represents a schematic detail of yet another example three dimensional sealant component in accordance with the present invention;
FIG. 8 represents a schematic detail of still another example three dimensional sealant component in accordance with the present invention;
FIG. 9 represents a schematic detail of yet another example three dimensional sealant component in accordance with the present invention; and
FIG. 10 represents a schematic detail of still another example three dimensional sealant component in accordance with the present invention.

### Detailed Description of Example Embodiments of the Inventio

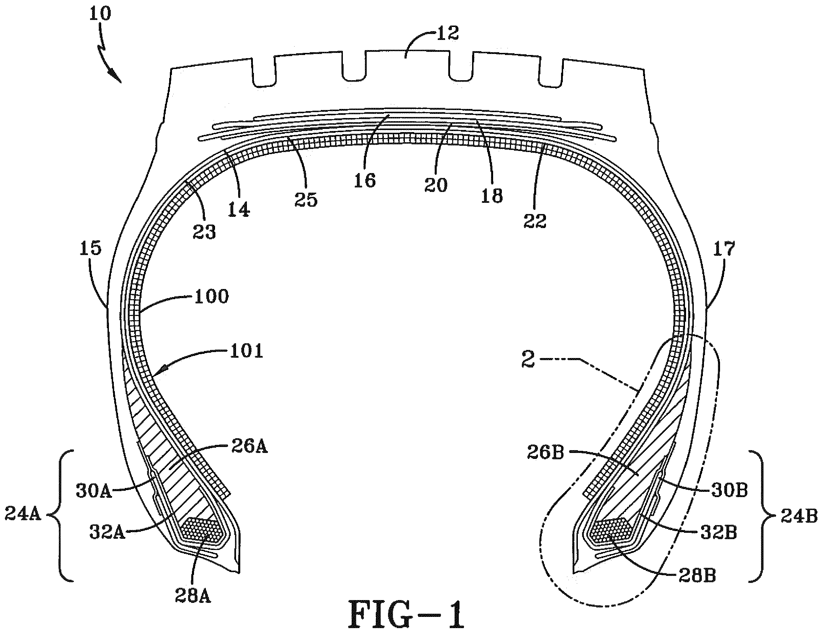

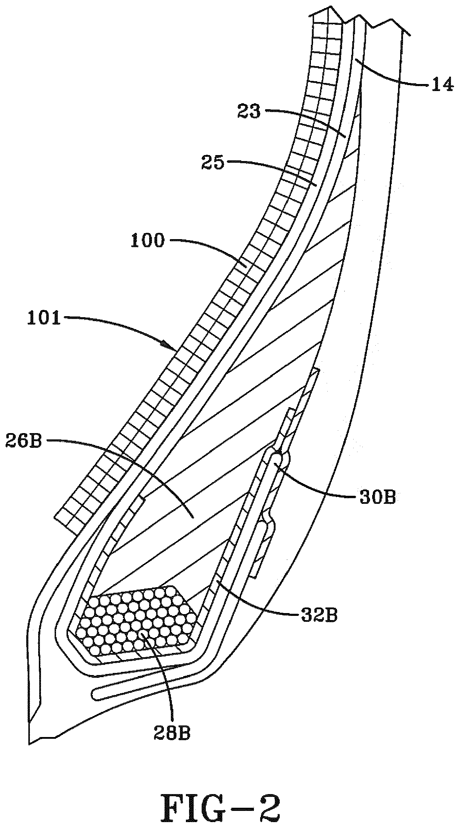

FIG. 1 shows an example tire 10 for use with sealant components in accordance with the present invention. The example tire 10 has been described in US-B-7,992,611. The example tire 10 has a tread 12, an inner liner 23, a belt structure 16 comprising belts 18, 20, a carcass 22 with preferably a single carcass ply 14, two sidewalls 15, 17, an innerliner 25, a sealant component 101 preferably extending along the entire cross-sectional length of the innerliner, and two bead regions 24a, 24b preferably comprising bead filler apexes 26a, 26b and beads 28a, 28b. The example tire 10 is suitable, for example, for mounting on a rim of a passenger vehicle. The carcass ply 14 includes a pair of axially opposite end portions 30a, 30b, each of which is secured to a respective one of the beads 28a, 28b. Each axial end portion 30a or 30b of the carcass ply 14 is preferably turned up and around the respective bead 28a, 28b to a position sufficient to anchor each axial end portion 30a, 30b, as seen in detail in FIG. 2.

The carcass ply 14 may be a rubberized ply having a plurality of substantially parallel carcass reinforcing members made of such material as polyester, rayon, or similar suitable organic polymeric compounds. The carcass ply 14 engages the axial outer surfaces of two flippers 32a, 32b.

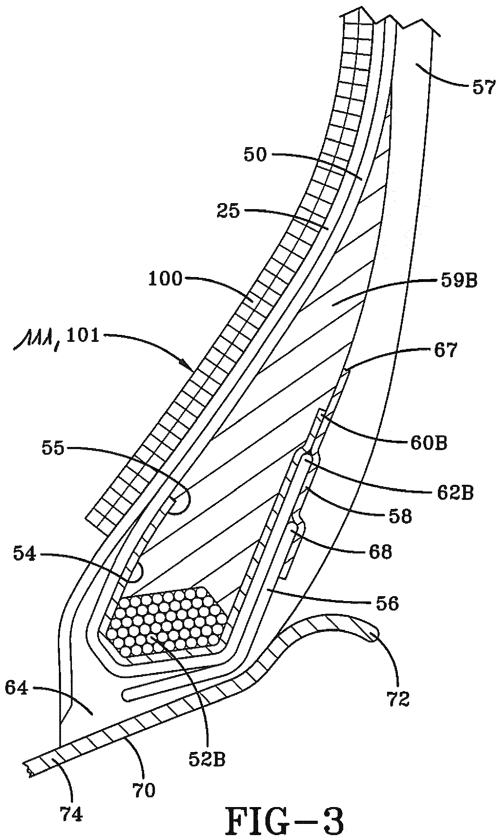

FIG. 3 shows, in cross-sectional view, the bead region of another example tire for use with the reinforcing components in accordance with the present invention. A carcass ply 50 wraps around a bead 52b and is separated from the bead by a flipper 54. The flipper 54 may be a layer of fabric disposed around the bead 52b and inward of a portion of the carcass ply 50 which turns up under the bead. The flipper 54 may have physical properties (such as shearing modulus of elasticity) intermediate to those of a rigid metal bead 52b and a less rigid carcass ply 50. The flipper 54 therefore may serve as an active strain-relieving layer separating the bead 52b from the carcass ply 50. The carcass ply 50 may be reinforced with metal.

The example tire of FIG. 3 also may have a chipper 56 located in the bead area for reinforcing the bead area and stabilizing the axially inwardmost part of the sidewall 57. The flipper 54 and chipper 56, along with the patch 58 uniting them, are discussed separately below, and then in operational conjunction with one another.

The flipper 54 wraps around the bead 52b and extends radially outward into the sidewall regions of the example tire. The axially inward portion 55 of the flipper 54 terminates within the bead-filler apex 59b. The axially outward portion 60b of the flipper 54 lies radially beyond a turnup end 62b, which itself is located radially beyond the radially outermost reach of the chipper 56 (discussed separately below). The axially outwardmost portions 62b of the turnup end 62b of the carcass ply 50 may extend radially outward about 15-30 millimeters beyond the top of a wheel rim flange 72 of a wheel rim 70.

As shown in FIG. 3, the flipper 54 may be deployed about the bead 52b which is itself circumferentially disposed within the example tire. An axially inward portion 55 of the flipper 54 may extend radially outward from the bead 52b to a location approximately axially adjacent to the top of the wheel rim flange 72 of the wheel rim 70. On an axially outward side, the flipper 54 may extend radially outward from the bead 52b to an end 60b above the wheel rim flange 72. The radially outermost reach of the end 60b of the flipper 54 may extend between about 7-15 millimeters beyond the radially outermost reach of the turnup end 62b. The flipper 54 may be termed "active" because it actively absorbs (i.e. during tire deflection) differential strains between the relatively rigid bead 52b and the relatively less rigid carcass ply 50.

The chipper 56 may be disposed adjacent to the portion of the carcass ply 50 that is wrapped around the bead 52b. More specifically, the chipper 56 may be disposed on the opposite side of the portion of the carcass ply 50 from the flipper 54. The axially inwardmost portion of the chipper 56 lies in the portion of the bead region that, when the tire is mounted on the wheel rim 70, would lie closest to a circularly cylindrical part 74 of the wheel rim. The axially and radially outwardmost portion of the chipper 56 lies in the portion of the bead region that, when the tire is mounted on the wheel rim 70, would lie axially inward of the circular portion of the wheel rim 70, being separated from the circular portion of the wheel rim by tire rubber such as a toe guard 64.

In other words, as can be seen in FIG. 3, the chipper 56 is disposed circumferentially about the radially inwardmost portion of the carcass ply 50 where the carcass ply turns up under the bead 52b. The chipper 56 may extend radially outward, being more or less parallel with the turned up end 62b of the carcass ply 50.

The chipper 56 protects the portion of the carcass ply 50 that wraps around the bead 52b from the strains in the rubber that separates the chipper from the wheel rim 70. The chipper 56 reinforces the bead area and stabilizes the radially inwardmost part of the sidewall 57. In other words, the chipper 56 may absorb deformation in a way that minimizes the transmission of stress-induced shearing strains that arise inward from the wheel rim 70, through the toe guard 64, to the turned up portion 62b of the carcass ply 50, where the chipper is most immediately adjacent to the rigid bead 52b.

The patch 58 shown in FIG. 3, if used, is circumferentially disposed about the bead 52b in such a way as to overlie the radially outermost regions 68 of the chipper 56 and the turned up ends 62b of the carcass ply 50. The patch 58 performs a function similar to that of those of the chipper 56 and the active flipper 54. More specifically, the patch 58 may absorb shearing stresses in the rubber parts which might otherwise induce separation of the flexible rubber from the less flexible material of the chipper 56 and the carcass ply 50. The patch 58 may, for example, be made of nylon fabric. The radially outwardmost portion 67 of the patch 58 may reach to a minimum level such as extending by at least 5 mm above the upper end 60b of the flipper 54, and preferably 10-15 mm above. The radially inwardmost portion of the patch 58 may overlap about 10 mm with the chipper 56.

The net effect of the incorporation of the flipper 54 and the chipper 56 is to provide strain buffers that relieve or absorb differential shearing strains that otherwise, were the flippers and chippers not present, could lead to separation of the adjacent materials that have disparate shearing moduli of elasticity. Furthermore, this reinforced construction may increase durability of the tire by means of the incorporation of a smaller number of components than for standard constructions with gum strips.

In accordance with the present invention, a sealant component 101 extends along the innerliner 25 or at least along a part of the innerliner 25. Preferably, the sealant component extends from one bead portion 24a, up the sidewall 15, beneath the tread 12, and down the other sidewall 17 to the other bead portion 24b (FIG. 1). The sealant component 101 is preferably located radially inwards from the innerliner 25 and in contact with the innerliner 25 as shown.

The sealant component 101 is constructed of a three-dimensional spacer fabric 111 for defining cells containing a sealant material 100. Preferably, the three-dimensional spacer fabric 111 has a thickness in a range of from 1 to 10 mm, more preferably 2 to 6 mm.

The cells preferably have a width in the radial direction in a range of from 0.5 to 10 mm, preferably 1 to 5 mm, a width in the axial direction in a range of from 0.5 to 10 mm, preferably 1 to 5 mm, and a width in the circumferential direction in a range of from 0.5 to 10 mm, preferably 1 to 5 mm. The cells may however also be tubular cells having, for instance, a round, hexagonal, trapezoidal or rectangular cross section, and extending in the axial and/or in the circumferential direction, i.e. for instance under an angle of 0 degree with respect to the axial or the circumferential direction or under an angle in a range of from 0 to 90 degrees with respect to the axial direction. The tubular cell may have a diameter in the range of from 0.5 to 10 mm, preferably 1 to 5 mm and a length of 10 mm or more.

The spacer fabric 111 allows a sealant protection not only underneath the tread 12, but also along the sidewalls 15, 17.

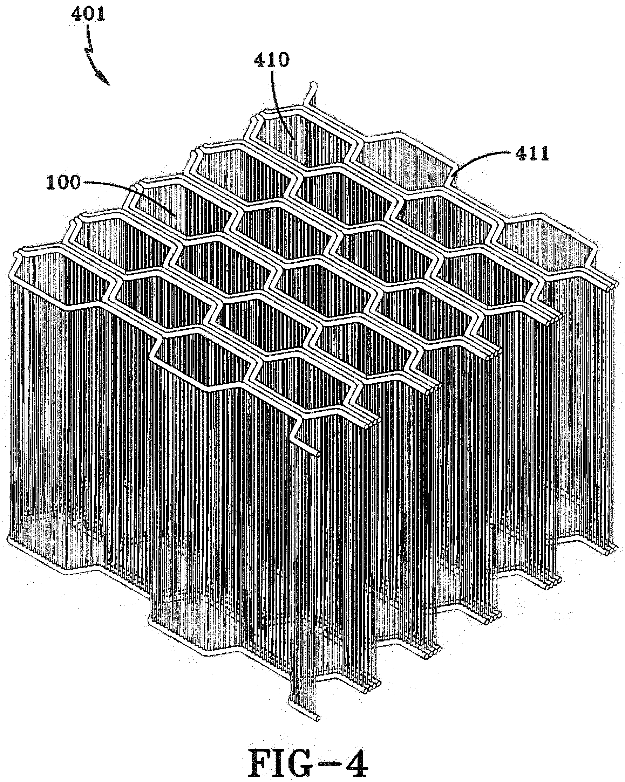

FIGS. 4-10 show examples of different sealant components 401, 501, 601, 701, 801, 901, 1001 having varying spacer fabrics 411, 511, 611, 711, 811, 911, 1011. Such fabrics are described in US-A-2016/0121663.

The spacer fabrics 111, 411, 511, 611, 711, 811, 911, 1011 preferably prevent the sealant 100 from flowing during tire rotation.

The spacer fabric 111, 411, 511, 611, 711, 811, 911, or 1011 constrain the sealant 100, which may be injected into cells of the spacer fabric at a high temperature, since the viscosity of the sealant may lessen with the temperature. The sealant 100 may be a liquid, a paste or a gel.

The spacer fabric 111, 411, 511, 611, 711, 811, 911, or 1011 may be secured to the innerliner 25 by adhesive, hook and loop fasteners, adhesion, cohesion, etc. so that the sealant component 101, 401, 501, 601, 701, 801, 901, 1001 may remain secured to the innerliner 25 during tire rotation. Pneumatic pressure within the tire 10 may also assist this securing effect.

Such a sealant component 101, 401, 501, 601, 701, 801, 901, 1001 may further reduce tire noise during rotation of the tire 10 under load.

This sealant component 101, 401, 501, 601, 701, 801, 901, 1001 may also reduce tire weight compared to a tire with sealant 100 applied directly on to the innerliner 25.

The spacer fabric 111, 411, 511, 611, 711, 811, 911, 1011 may be woven or knitted from high performance fibers for instance. These fibers may be constructed as a single component, from such materials as carbon fiber, glass fiber, basalt fiber, and/or other suitable high performance fibers or of multi component fibers consisting of a combination of these materials.

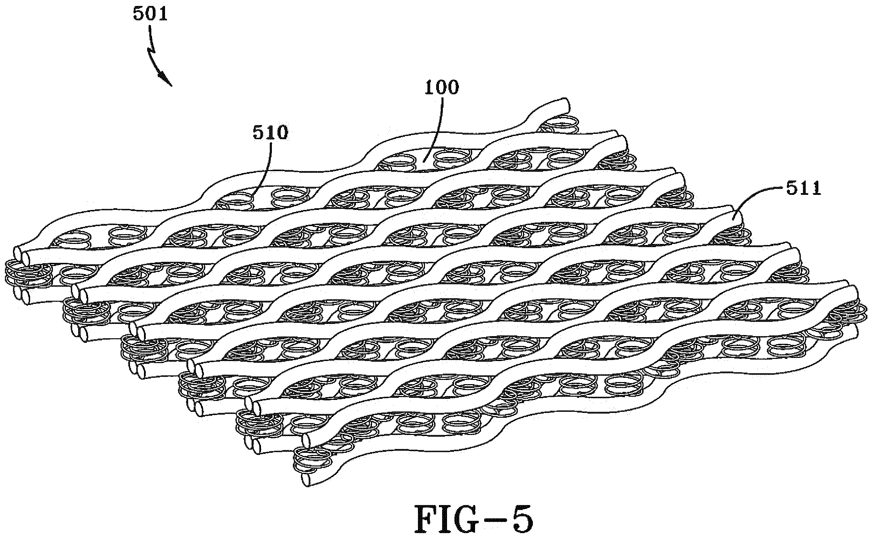

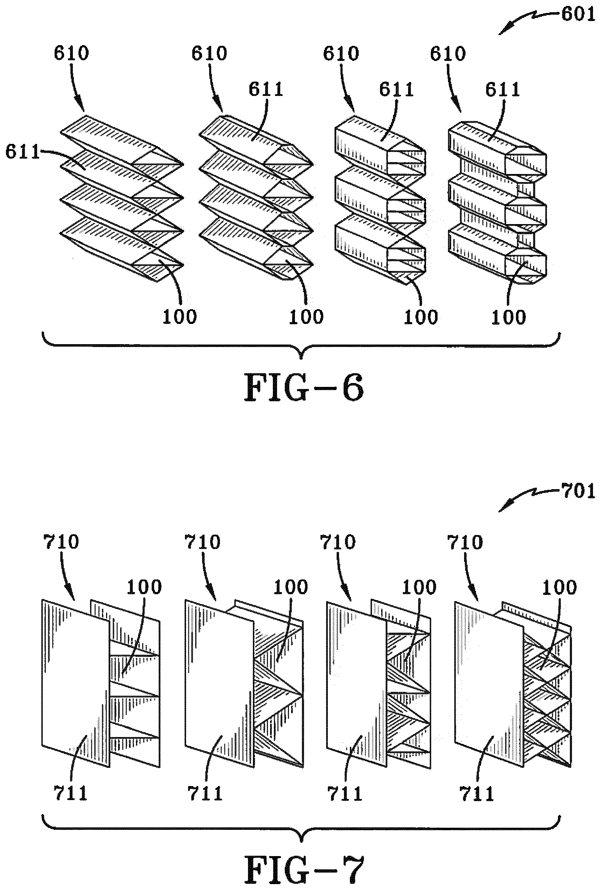

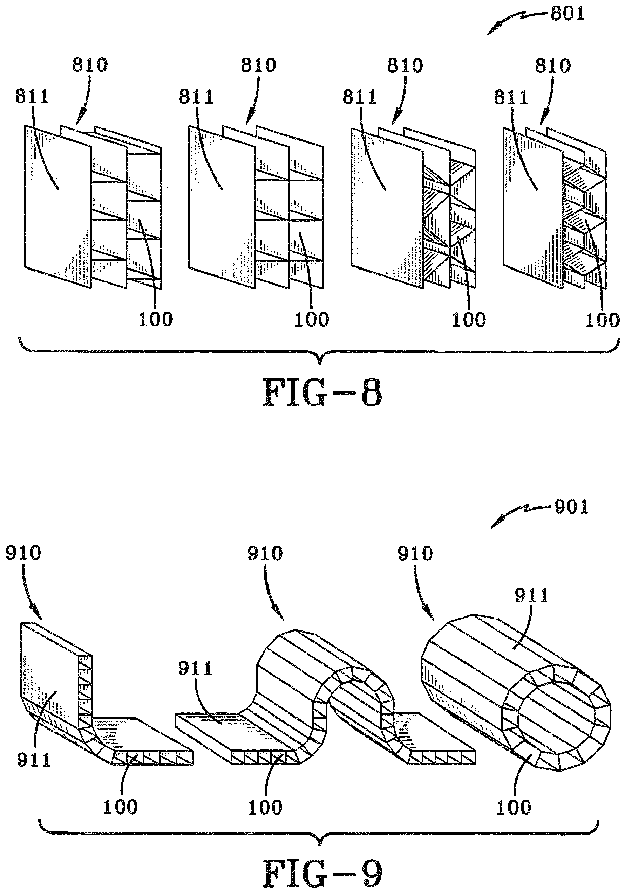

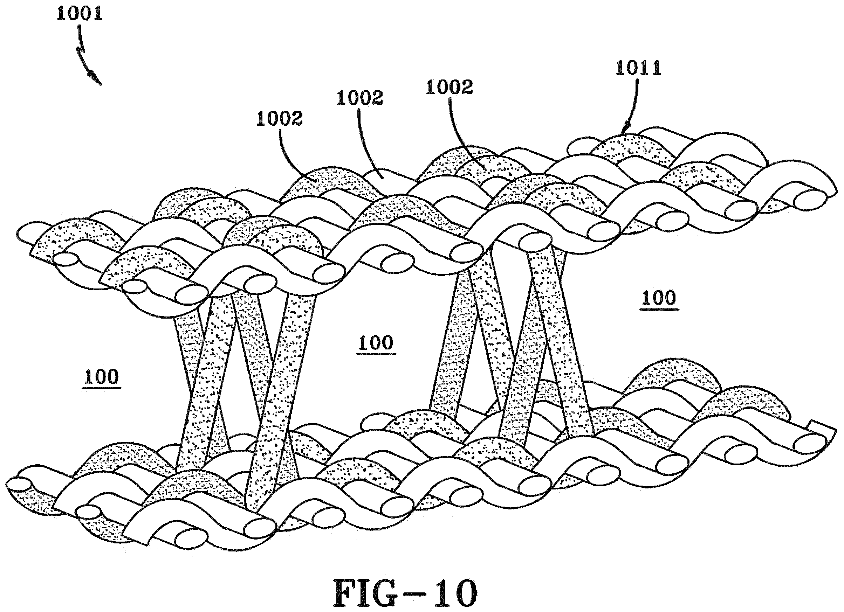

Fig. 4 shows an example sealant component 401 with hexagonal constructions 410 containing the sealant material 100. Fig. 5 shows an example sealant component 501 with wave constructions 510 containing the sealant material 100. Fig. 6 shows an example sealant component 601 with four example hexagonal constructions 610 containing the sealant material 100. Fig. 7 shows an example sealant component 701 with three planar constructions 710 containing the sealant material 100. Fig. 8 shows an example sealant component 801 with four example two plane constructions 810 containing the sealant material 100. Fig. 9 shows an example sealant component 901 with three example curved constructions 910 containing the sealant material 100. Fig. 10 shows an enhanced view of an example sealant component 1001 interrelated individual fibers 1002 containing the sealant material 100. The sealant component 1001 may have a plurality of cells defined by the three dimensional structure of the fabric 1011.

One example sealant material 100 is disclosed in US-B-8,387,672. The example sealant material 100 may comprise polyurethane. The polyurethane composition of the example sealant material 100 may include a self-healing polyurethane elastomeric material, which may contain, for example, methylene diphenyl 4,4'-diisocyanate (MDI) and poly(alkylene oxide)glycol. Suitable polyurethane compositions for the example sealant material 100 may have a crosslink density in a range of from 0.3 milliseconds⁻¹ to 0.6 milliseconds⁻¹.

Upon vulcanization of the tire at an elevated temperature, a polyurethane composition having a crosslink density in a range from 0.2 milliseconds⁻¹ to 0.5 milliseconds⁻¹ may thermally degrade to give a thinner polyurethane composition, namely a polyurethane composition having a somewhat greater degree of fluidity, that provides the pneumatic tire 10 with self-sealing properties and defines the sealant material 100 and the sealant component 101, 401, 501, 601, 701, 801, 901, or 1001.

The resulting example sealant material 100 may further include a colorant in the polyurethane to provide a non-black sealant 100 having the capability of visibly identifying a puncture wound. That puncture wound may result in a physical flow of the example sealant material 100 through the puncture wound to form a contrastingly non-black colored sealant on a visible surface of the black colored innerliner 25.

The colorant may include titanium dioxide. For example, the colorant of the example sealant material 100 may be titanium dioxide where a white colored sealant is desired. Also, such colorant may include titanium dioxide as a color brightener together with at least one non-black organic pigment and/or non-black inorganic pigment or dye. Various colorants may be used to provide a non-black color to the sealant material 100.

A polyurethane precursor composition, prior to building the tire 10, may be prepared by mixing together the polyurethane components. The polyurethane precursor, with a particulate filler and/or non-woven microfiber layer, may be partially self-supporting so as to provide further stability to the sealant component 101, 401, 501, 601, 701, 801, 901, 1001 without the use of complex, expensive tire building equipment.

## Claims

1. A pneumatic tire comprising two axially inextensible annular beads (28A, 28B), a carcass (22) having at least one reinforced ply (14), an air impermeable innerliner (23) extending along an interior of the carcass from one bead region (24A) to the other bead region (24B) of the tire (10), a tread (12) disposed radially outward of the carcass (22), a belt structure (16) disposed radially between the carcass (22) and the tread (12), and a sealant component (101) having a three dimensional fabric (100) and a flowable sealant material (100) contained by the three dimensional fabric (100).

2. The pneumatic tire of claim 1 wherein the sealant component (101) further comprises an adhesive disposed thereon for securing the sealant component (101) to the innerliner (22).

3. The pneumatic tire of claim 1 or 2 wherein the sealant component (101) has hexagonal structures containing the sealant material.

4. The pneumatic tire of at least one of the previous claims wherein the sealant component (101) has wave structures containing the sealant material (100).

5. The pneumatic tire of at least one of the previous claims wherein the sealant component (101) has three, four or more hexagonal structures containing the sealant material (100).

6. The pneumatic tire of at least one of the previous claims wherein the sealant component (101) has three, four or more planar structures containing the sealant material (100).

7. The pneumatic tire of at least one of the previous claims wherein the sealant component (101) has three, four or more two plane structures containing the sealant material (100).

8. The pneumatic tire of at least one of the previous claims wherein the sealant component (101) has three, four or more curved structures containing the sealant material (100).

9. The pneumatic tire of at least one of the previous claims wherein the sealant component (101) has interrelated individual fibers containing the sealant material (100).

10. The pneumatic tire of at least one of the previous claims wherein the sealant component (101) has a plurality of cells defined by a three dimensional structure of the three dimensional fabric (100).
